# EUROPÄISCHE PATENTSCHRIFT

(11) **EP 1 943 064 B1**
(45) Veröffentlichungstag und Bekanntmachung des Hinweises auf die Patenterteilung: **08.07.2009**
(21) Anmeldenummer: 06791783.1
(22) Anmeldetag: 01.09.2006
(51) Int. Cl.: B25J 15/02, B29C 67/00

(54) **ROBOTER-GREIFER**
ROBOT GRIPPER
PINCE DE ROBOT

(30) Priorität: 27.09.2005 DE 102005046160
(43) Veröffentlichungstag der Anmeldung: 16.07.2008
(73) Patentinhaber: Fraunhofer-Gesellschaft zur Förderung der angewandten Forschung e.V., 80686 München (DE)
(72) Erfinder: BECKER, Ralf, 71672 Marbach (DE); GRZESIAK, Andrzej, 70569 Stuttgart (DE)
(74) Vertreter: Rösler, Uwe
(86) Internationale Anmeldenummer: PCT/EP2006/008555
(87) Internationale Veröffentlichungsnummer: WO 2007/036280

(56) Entgegenhaltungen:
- EP-A1- 0 764 503
- EP-A2- 0 441 060

## Beschreibung

### Technisches Gebiet

Die Erfindung bezieht sich auf ein Roboter-Greifer mit einem Befestigungsflanch für eine lösbare Anbringung an einen Robotermanipulatoramn, gemäß dem Oberbegriff des Ansprunch 1. Ein solcher Roboter-Greifer ist aus der EP-A-0 764 503 bekannt.

### Stand der Technik

Roboter-Greifer werden in der industriellen automatisierten Handhabung für den Transport, der Positionierung oder Manipulation von bzw. an Werkstücken benötigt, die beispielsweise zwischen einzelnen Arbeitsgängen von Fördereinrichtungen in Maschinen, Vorrichtungen oder Verpackungen verbracht und dort gezielt abgelegt werden müssen. Derartige Greifer sind typischerweise an Roboterarmen oder an Endbereichen von Linear- oder Rotationsantrieben befestigt, finden jedoch auch als fest montierte Spannvorrichtungen Verwendung, beispielsweise zum Laserbeschriften beliebiger Bauteile.

Der Einsatz von Roboter-Greifern an Robotern oder anderen bewegten Achsen erfordert das Gewicht eines Greifers möglichst gering zu halten, um den heutzutage üblichen hohen Beschleunigungen keine allzu hohen Trägheitskräfte entgegenzusetzen.

Roboter-Greifer finden vielseitige Anwerldungsmöglichkeiten, weswegen es einen diesbezüglichen großen Variantenreichtum gibt, der von rein mechanischen Systemen über die Ausnutzung von Magneteffekten bis hin zu Vakuum-unterstützten Ausführungen reicht und darüber hinaus weitere Wirkprinzipien zu nutzen vermögen. Die nachfolgenden Ausführungen beschränken sich auf rein mechanische Greifer, bei denen durch eine lineare Bewegung oder durch eine Kippbewegung von Greiferfingem oder Greiferbacken ein entsprechend geformtes Bauteil form- oder kraftschlüssig erfasst im Sinne von eingespannt werden kann. In der Kategorie der mechanischen Greifer unterscheidet man üblicherweise so genannte Parallelbackengreifer und Winkelgreifer. Parallelbackengreifer werden standardmäßig mit zwei, drei oder vier Greiferbacken ausgerüstet, von denen wenigstens eine Greiferbacke linear zu einem Zentrum zu oder von diesem weg bewegbar ist, um das Bauteil einzuspannen. Winkel- oder Schwenkgreifer werden hingegen mit Greiferbacken ausgerüstet, von denen wenigstens eine Greiferbacke um eine Achse auf ein Zentrum zu oder von diesem weg bewegt wird, um das Bauteil entsprechend einzuspannen.

Üblicherweise bestehen mechanische Greifer aus unterschiedlichen Baugruppen, deren Fertigung durch modulares Zusammenfügen einzelner Teile und Baugruppen erfolgt. So verfügen mechanische Greifer typischerweise über ein Gehäuse mit Druckluftanschluss, einen Kolben mit Dichtringen, einer Stößelstange, einer Rückstellfeder, diverse Drehachsen oder Linearführungen, Greiferbacken mit Gewindebohrungen sowie Bohrungen für Zentrierhülsen. Die vorstehenden Bauteile bzw. Baugruppen werden in einer Vielzahl einzelner Montageschritten unter strenger Qualitätskontrolle zusammengefügt, um letztlich einen Greifer mit erwünschter Leichtgängigkeit und Langlebigkeit zu erhalten.

Jedoch unterliegen handelsübliche Greifer einem gewissen Verschleiß von Dichtungen, Lagerungen und Führungen, der sehr stark ins Gewicht fällt, insbesondere in jenen Fällen, in denen die Qualität der montierten Bauteile sowie die der Montage selbst zu gering ist. Infolgedessen bedarf es bei der Herstellung sowohl einer kostenintensiven Montage als auch einer gewissenhaften Qualitätskontrolle.

Trotz der bestehenden hohen Qualitätsanforderungen an mechanische Greifersysteme, die letztlich nur durch kostenintensive Maßnahmen hinsichtlich Qualität der Bauteile selbst sowie hinsichtlich der Montage zu erfüllen sind, besteht aus wettbewerbsbedingten Rahmenbedingungen das Erfordernis, die Herstellkosten möglichst gering zu halten, weswegen individuelle Größen und Konfektionierungen an bestimmte Greiferaufgaben bei der Auslegung derartiger Greifer aus Kostengründen nicht angeboten werden können. Vielmehr werden in einer Modellreihe eines Greifers abgestufte Größen angeboten, die mit Greiferbacken mit Standardanschlüssen, wie beispielsweise einer Flanschfläche mit Gewindebohrungen und Zentriermöglichkeiten erhältlich sind. Kundenseitig sind im Weiteren greiferbedarfsgerechte Anpassungen vorzunehmen, wie beispielsweise Anfertigen bestimmter Greiferfinger, passend für den kommerziell erhältlichen Greifer, die an die jeweils individuellen Greiferaufgaben konstruktiv angepasst werden müssen. Ferner gilt es, die individuell angefertigten Greiferfinger an die konventionell erhältlichen Greiferplattformen zu montieren. Ein derartiger Aufwand kann insbesondere bei der Hantierung kleiner Stückzahlen im Hinblick auf das Gesamtsystem des Greifersystems zu stark ins Gewicht fallen, so dass vielfältige Greiferaufgaben bereits aus Kostengründen nicht automatisiert werden können.

Hinzu kommt, dass die individuell vorzunehmenden Anpassungsarbeiten zu nicht gewichtsoptimierten Baugruppen führen und somit die Leistungsfähigkeit konventionell gefertigter Greiferplattformen erheblich in Mitleidenschaft zieht.

Aus der DE 44 32 253 A1 ist ein Mechanismus zur Bewegungs- und Kraftübertragung entnehmbar, insbesondere in Form einer Mikrogreifzange, die eine einstückige sowie auch stofflich zusammenhängende Form aufweist und bei einem beschriebenen Ausführungsbeispiel ein Volumen umfasst, das zu Zwecken der Zangenfunktion mit einem Medium befüllbar ist.

Ferner wird in der DE 102 35 427 A1 eine Vorrichtung sowie ein Verfahren zum Herstellen von dreidimensionalen Objekten mittels eines generativen Fertigungsverfahren beschrieben. Hierbei werden dreidimensionale Objekte mittels eines Aufbaumaterial geschaffen; dass sich schichtweise unter Verwendung elektromagnetischer oder Teilchenstrahlung verfestigt.

Aus der EP 0 764 503 B1 sowie der US 5,046,773 sind Greifwerkzeuge zu entnehmen, deren Greiferfunktion auf eine kontrollierte Ausdehnung sowie Kompression eines faltenbalgartig ausgebildeten Aktorelementes zurückgeht.

Der DE 103 40 052 A1 ist ein Verfahren zur Herstellung von flexiblen Funktionsspannelementen zu entnehmen, die über Hohlräume, Kanäle oder Hohlkammern verfügen und im Wege eines additiven Aufbaus hergestellt sind, insbesondere im Wege des Lasersinterns oder Laserschweifßens.

### Darstellung der Erfindung

Der Erfindung liegt die Aufgabe zugrunde, einen Roboter-Greifer der vorstehend beschriebenen Gattung mit einem Befestigungsflansch für eine lösbare Anbringung an einen Robotermanipulatorarm sowie mit wenigstens ein, sich in einem Rahmen abstützenden Aktorelement, das wenigstens zwei Greiferbacken mittel- oder unmittelbar kinematisch über wenigstens eine Gelenkeinheit betätigt, derart weiterzubilden, dass die Herstellung eines derartigen Roboter-Greifers im Unterschied zu den bisherigen Montagetechniken vereinfacht, kostengünstiger und schneller erfolgen kann. So soll es möglich sein, einen an eine bestimmte Greiferaufgabe individuell angepassten Roboter-Greifer auch mit einer sehr geringen Stückzahl mit einem wirtschaftlich vertretbaren Aufwand herzustellen und dies mit einer Greiferqualität die keinerlei Anlass zur Kritik hinsichtlich Funktionalität und Lebensdauer des Greifersystems aussetzt. So soll es überdies möglich sein, einen Roboter-Greifer auch mit beliebig gewählter Skalierung herzustellen, ohne dabei einen großen montagebedingten sowie kostenbedingten Aufwand in Kauf nehmen zu müssen.

Die Lösung der der Erfindung zugrunde liegenden Aufgabe ist im Anspruch 1 angegeben.

Lösungsgemäß zeichnet sich ein Roboter-Greifer mit den Merkmalen des Oberbegriffes des Anspruches 1 dadurch aus, dass zumindest der Befestigungsflansch, der Rahmen sowie das Aktorelement einstückig im Rahmen eines generativen Fertigungsverfahrens hergestellt sind, und dass das Aktorelement faltenbalgartig ausgebildet ist, ein inneres, über wenigstens eine Öffnung mit einem Medium befüllbares Volumen einschließt, das sich bei Befüllen mit dem Medium längs einer durch die faltenbalgartige Ausbildung des Aktorelementes vorgegebene Linearachse auszudehnen und bei Entleerung des Volumens in entgegengesetzter Richtung längs der Linearachse zusammenzuziehen vermag.

Generative Fertigungsverfahren ermöglichen die dreidimensionale Ausbildung von Objekten direkt unter Zugrundelegung konstruktiv vorgegebener CAD-Daten in einem einzigen Arbeitsgang derart, so dass nach Beendigung des Arbeitsganges das dreidimensionale Objekt funktionsvollkommen ohne weiteren Montageaufwand sofort einsatzbereit ist. So lassen sich lösungsgemäß die Komponenten eines Roboter-Greifers, nämlich der Befestigungsflansch, der Rahmen sowie das Aktorelement einstückig und ganzheitlich unter Verwendung eines generativen Fertigungsverfahrens herstellen, so dass unter Zugrundelegung kundenspezifischer, einen Roboter-Greifer beschreibenden CAD-Datensatz bedarfsgerechte Roboter-Greifer herstellbar sind. Je nach Wunsch und Anforderungen durch den Kunden können Greifersysteme hergestellt werden mit und ohne Greiferbacken, die sich zudem beliebig in der Größe skalieren lassen und auf diese Weise optimal an bestimmte Greiferanforderungen anpassen lassen. Durch die grundsätzliche Freiheit im Hinblick auf Größe und Formgebung der Roboter-Greifer können durch geeignete Konstruktion Greifer hergestellt werden, die über ein optimiertes Gewicht verfügen und somit eine Leichtgängigkeit im Einsatz mit hochdynamischen Roboterannen gewährleisten.

Generative Fertigungsverfahren bieten enorme gestalterische Freiheiten, zumal keinerlei Rücksicht auf konstruktiv bedingte Endformschrägen, Hinterschnitte sowie auch gleich bleibende Wandstärken genommen werden muss. Vielmehr ist es möglich, durch Variation der Wandstärke von Bauteilen hochfeste und elastische Bereiche vorzusehen und diese direkt miteinander zu kombinieren.

Gegenüber konventionellen Montagetechniken können die Gesamtkosten verglichen mit marktüblichen Systemen erheblich reduziert werden. Eine weitere Anwendung der lösungsgemäß angegebenen Roboter-Greifer könnte der Einsatz in voll automatisierten Fertigungen sein, in denen sich die Fertigungslinien selbsttätig auf die jeweils zu produzierenden Teile einstellen. Automaten werden in der Lage, auch die zur Handhabung erforderlichen Greifersysteme autonom und selbständig zu fertigen, in Betrieb zu nehmen und nach Auslaufen der Serie wieder zu recyceln.

Als Beispiele für generative Fertigungsverfahren seien beispielsweise das Rapid-Proto-Typing genannt, das unter Verwendung eines phototithografischen Systems dreidimensionale Objektstrukturen durch gezielten lokalen Energieeintrag innerhalb eines Werkstoffes einzubeschreiben vermag. Hierbei erfolgt der photolithografische Belichtungsvorgang zumeist schichtweise innerhalb eines Körpers, bestehend aus einem photoempfindlichen Werkstoff, der durch Belichtung in bestimmten Werkstoffregionen eine Werkstoffumwandlung beispielsweise im Wege einer gezielten Polymerisation oder Verschmelzung erfährt. Des Weiteren sind Polymerisationsprozesse durch schichtweises Aushärten innerhalb eines Flüssigkeitsbades bekannt, um dreidimensionale Objekte zu fertigen. Auch ist es möglich durch schichtweises Auftragen und Verfestigen von Pulverschichten entsprechende Objekte zu generieren.

Im Weiteren seien unter Bezugnahme auf die nachstehenden Figuren zwei. Ausführungsbeispiele beschrieben, die zwei konkrete Roboter-Greifer darstellen, die im Wege eines generativen Fertigungsverfahrens herstellbar sind.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a,b,c: perspektivische Darstellungen sowie Längsschnitt durch einen Roboter Greifer mit Gelenkeinheiten,
- Fig. 2a.b: perspektivische Darstellungen eines Greifers gemäß Fig. 1 mit Greiferbacken, sowie
- Fig. 3a,b: perspektivische Darstellungen sowie Längsschnitt durch einen Roboter- Greifer mit Filmgelenken.

### Wege zur Ausführung der Erfindung, gewerbliche Verwendbarkeit

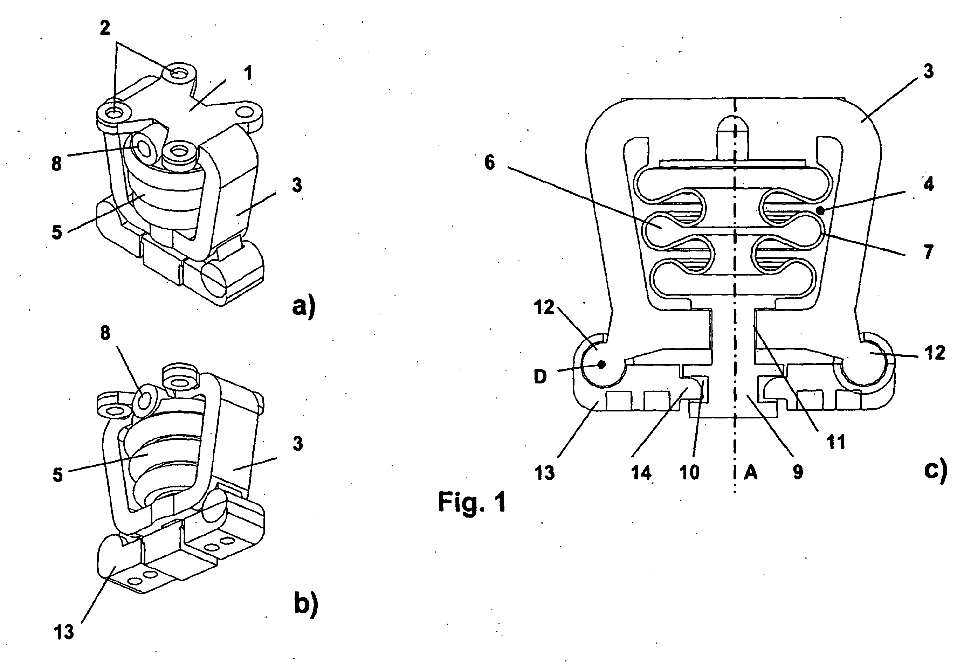

In Fig. 1a und b ist eine perspektivische Darstellung eines Roboter-Greifers gezeigt, die in Fig. 1c in Längsschnitt dargestellt ist. Der Roboter-Greifer weist an seinem oberen Ende einen Befestigungsflansch 1 auf, über den der Greifer mit vier nicht - dargestellten Befestigungsstiften an einen ebenfalls nicht dargestellten Roboterarm lösbar fest montierbar ist. Einstückig mit der Befestigungsvorrichtung 1 verbunden ist ein als Joch geformter Rahmen 3 vorgesehen, der, wie die weiteren Ausführungen zeigen, sowohl als mechanisches Gegenlager als auch mechanisches Führungselement sowie auch als Gelenkeinheit dient. Innerhalb des von dem jochartig ausgebildeten Rahmen 3 umspannen Raum 4 ist ein faltenbalgartig ausgebildetes Aktorelement 5 vorgesehen, das ein innere Volumen 6 mit einer biegeelastischen Wand 7 umschließt. Die biegeelastisch ausgebildete Wand, die vorzugsweise gleichfalls wie alle übrigen Komponenten des Roboter-Greifers aus dem gleichen Material gefertigt ist, jedoch über eine sehr dünne Wandstärke verfügt, weist in einem Längsschnitt (siehe Bilddarstellung Fig. 1 c) einen wellig ausgebildeten Wandverlauf 7 auf, dessen Welligkeit eine Linearachse A vorgibt, längs der sich das faltenbalgartig ausgebildete Aktorelement im Wege eines Befüllens des Volumens 6 mit einem Medium, vorzugsweise mit Druckluft, auszudehnen vermag. Hierzu weist das faltenbalgartig ausgebildete Aktorelement 5 eine Anschlussleitung 8 auf, über die Druckluft in das Volumen 6 des faltenbalgartig ausgebildeten Aktorelementes 5 einspeisbar ist.

In Fig. 1c ist ersichtlich, dass das faltenbalgartig ausgebildete Aktorelement einseitig mit dem Rahmen 3 verbunden ist, wohingegen das andere Ende des faltenbalgartig ausgebildeten Aktorelementes 5 mit einem Kraftübertragungselement 9 verbunden ist.

Wird über die Anschlussleitung 8 Druckluft in das Volumen 6 des faltenbalgartig ausgebildeten Aktorelementes 5 eingespeist, so dehnt sich das Aktorelement 5 längs der Linearachse A gemäß Büddarstellung in Fig. 1c nach unten aus. Hierbei dient der obere Teil des Rahmens 3 als mechanisches Gegenlager für das sich längs der Linearachse A ausdehnenden Aktorelementes 5.

Das Kraftübertragungselement 9, das beidseitig zwei Führungsnuten 10 vorsieht, bewegt sich durch das sich ausdehnende Aktorelement 5 gleichfalls linear längs zur Linearachse A nach unten, wobei das Kraftübertragungselement 9 durch zwei seitliche Begrenzungsflanken 11 des Rahmens 3 längs zur Linearachse A zwangsgeführt ist.

Ferner weist der Rahmen 3 zwei Gelenkeinheiten 12 auf, um die längs zu einer die Zeichenebene in Fig.1c senkrecht schneidenden Drehachse D vorgesehene Anschlussstücke 13 schwenkbar gelagert sind. Die Anschlussstücke 13 umschließen die rahmenseits vorgesehenen Gelenkformen 12 nahezu vollständig, so dass sie gemeinsam mit dem rahmenseitigen Gelenkabschnitt 12 eine in sich -gekapselte, Gelenkeinheit bilden, die ihrerseits nicht demontierbar ist. Ferner verfügen die Anschlussstücke 13 jeweils über eine Führungskontur 14, die in die nutförmigen Ausdehnungen 10 des Kraftübertragungselements 9 hineinragen, wodurch die Anschlussstücke 13 bei vertikaler Verschiebung des Kraftübertragungselementes 9 längs der Linearachse nach unten jeweils um die Drehachsen D seitlich nach außen geschwenkt werden.

An den Anschlussstücken 13 lassen sich bedarfs- und einsatzgerecht entsprechend ausgebildete Greiferbackenelemente (nicht in Fig. 1 dargestellt) montieren.

Wird hingegen das Volumen 6 des Aktorelementes 5 entlüftet, so sorgt eine innerhalb der biegeelastischen Wand des Aktorelementes 5 vorgesehene rückstellende Federkraft dafür, dass das Kraftübertragungselement 9 längs der Linearachse A zurückgeführt wird, d.h. gemäß Bilddarstellung in Fig. 1c nach oben verfahren wird, wodurch letztlich die Anschlussstücke um die Drehachsen D zusammen geschwenkt werden. Dieser Vorgang entspricht dem Ergreifen eines zwischen zwei Greiferbacken platzierten Objektes.

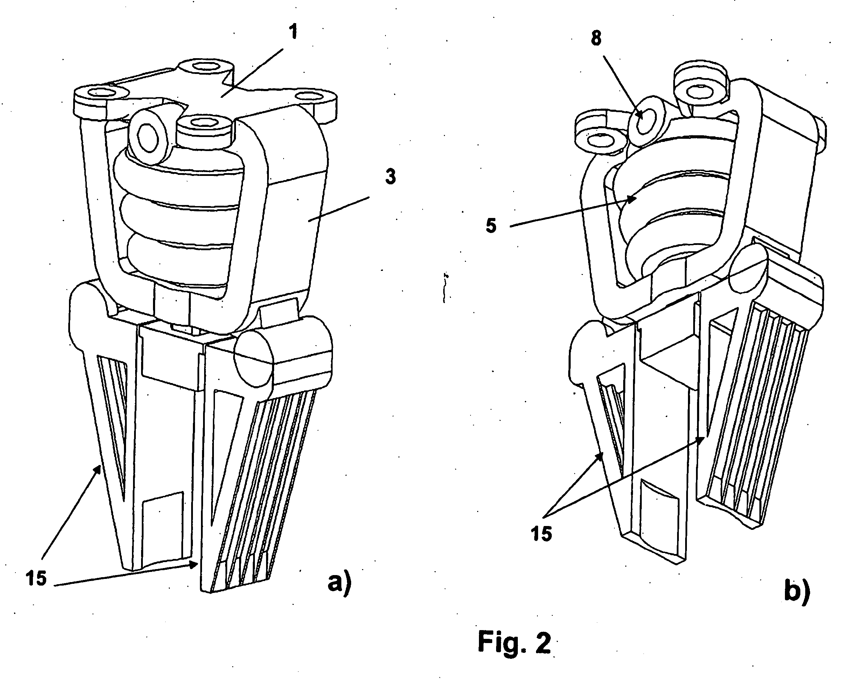

In Fig. 2a und b sind perspektivische Darstellungen eines Roboter-Greifers gemäß Bauart des in Fig. 1 beschriebenen Roboter-Greifers dargestellt, jedoch mit vorgesehenen Greiferbacken 15, die entweder einstückig mit den jeweiligen Anschlussstücken 13 gefertigt sein können, oder wie bereits vorstehend erwähnt, nachträglich an die Anschlussstücke 13 montiert werden können

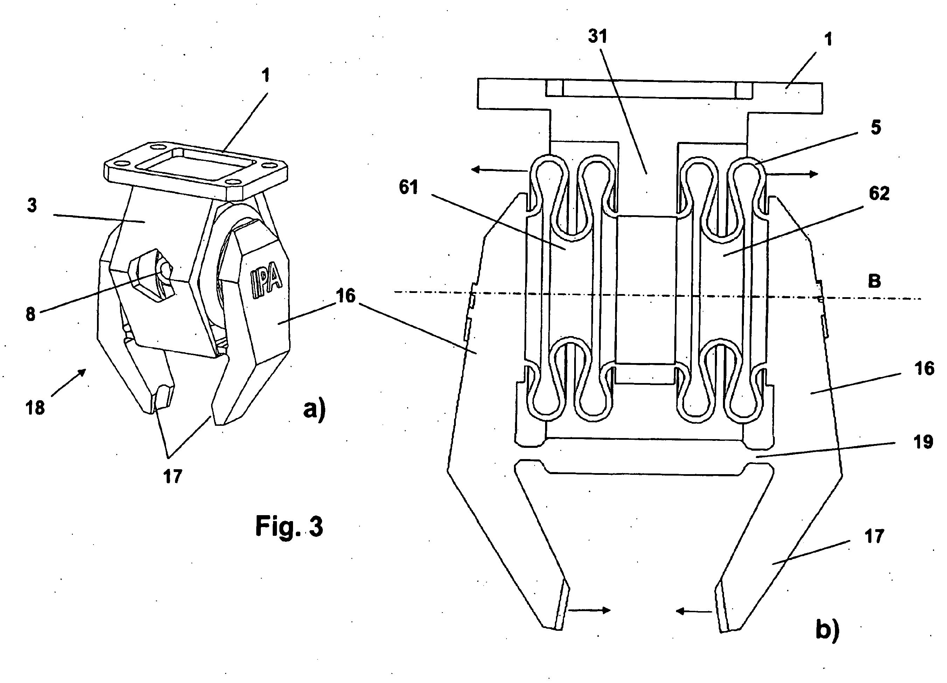

In Fig. 3a ist eine perspektivische Darstellung einer weiteren Variante eines Roboter-Greifers dargestellt, zu der in Fig. 3b eine entsprechende Längsschnittdarstellung gezeigt ist. Unter Bezugnahme auf Fig. 3b, die eine Längsschnittdarstellung einer weiteren Variante des Roboter-Greifers zeigt, kann ersehen werden, dass die Befestigungseinrichtung 1, der Rahmen 3, das Aktorelement 5 sowie die aus Hebelarm 16 und Greiferfinger 17 bestehende Greiferbacke 18 einstückig gefertigt sind. Im Unterschied zur Ausführungsvariante gemäß Fig. 1 stützt sich das faltenbalgartig ausgebildete Aktorelement symmetrisch an einem mittigen Rahmenabschnitt 31 ab und wird von diesem in zwei miteinander kommunizierende Teilvolumina 61, 62 unterteilt. Aus der Längsschnittdarstellung gemäß Fig. 3b ist ersichtlich; dass bei Befüllen der Teilvolumina 61, 62 mit. Druckluft über die Anschlussleitung 8 beide faltenbalgartig ausgebildete Aktorelementhälften längs der strichliert eingezeichneten Linearachse B jeweils in Pfeilrichtung nach außen ausgedehnt werden. Die dem Rahmenabschnitt 31 jeweils gegenüberliegenden Enden der faltenbalgartig ausgebildeten Aktorelementabschnitte sind mit dem Hebelarm 16 der Greiferbacke 8 fest verbunden, der jeweils über ein Filmgelenk. 19 mit einem Greiferfinger 17 verbunden ist. Bei der vorstehend beschriebenen. Bewegung der Aktorelementteile jeweils nach außen bewegen sich die gegenüberliegenden Greiferfinger 17 aufeinander zu, so dass auf diese Weise ein Greifvorgang kontrolliert erfolgen kann. Wird hingegen die Luft aus dem inneren Teilvolumina 61, 62 abgelassen, so öffnen sich beide Greiferfinger 17 aufgrund der rückstellenden Federkraft, die innerhalb der wellenartig ausgebildeten, biegeelastischen Wandung der Aktorelementteile wirksam wird.

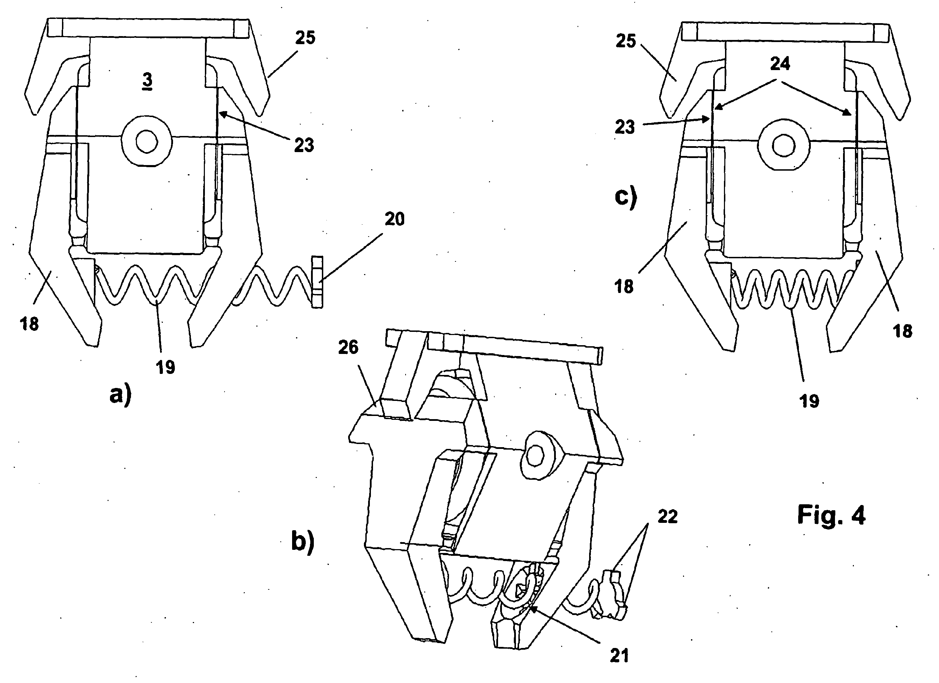

Letztlich hängen die Kraft und die Geschwindigkeit, mit der sich die Greiferfinger 17 öffnen, von der eigenelastischen Rückstellkraft des wellig ausgebildeten Wandmaterials des faltenbalgartig ausgebildeten Aktorelementes 5 ab sowie von der eigenelastischen Rückstellkraft der als Filmscharniere ausgebildeten Gelenkzone. Ein allein durch die Eigenelastizität des faltenbalgartig ausgebildeten Aktorelementes 5 hervorgerufenes Auseinanders reizen der Greiffinger 17 mag in einigen Anwendungsfällen zu langsam, zu wenig kraftvoll und auch nicht an einen definierten Endanschlag erfolgen, so dass zu diesem Zweck in einer weiteren vorteilhaften Ausführungsform ein zusätzliches krafterzeugendes Element in Form eines Federelementes 19 vorgesehen ist. In den Figuren 4a bis 4c ist ein derartig ausgebildeter Roboter-Greifer dargestellt. Das Federelement 19 ist einseitig fest und einstückig mit der in der Bilddarstellung linken Greiferbacke 18 verbunden, ohne dabei die Greiferfunktion des Greiffingers 17 zu beeinträchtigen. Das andere Federelementende erstreckt sich lose und sieht zusätzlich ein Abstützelement 20 vor. Anhand der perspektivischen Darstellung in Figur 4b ist ersichtlich, dass das Federelement 20 durch eine Ausnehmung 21 in der anderen Greiferbacke hindurchragt. An der Ausnehmung 21 sind Rastnasen vorgesehen, in die an dem Abstützelement 20 vorgesehene zapfenförmig ausgebildete Haltestege 22 eingreifen, wenn das Federelement 19 gespannt wird und zwischen beiden Greiferbacken 18 als die Greiferfinger 17 auseinander spreizendes Element dient (siehe Figur 4c). Die durch das Federelement 19 auf die beschriebene Weise bereitgestellte Vorspannung dient somit einer schnelleren Rückführung des faltenbalgartig ausgebildeten Aktorelementes 5 in einen komprimierten Zustand nach entsprechender Entleerung des Mediums durch die Anschlussleitung 8. Zudem vermag das Federelement 19 die Greiferbacken 18 mit ihren oberen Seitenflanken 23 gegen einen rahmenseitig vorgesehenen Endanschlag 24 zu drücken, durch den eine definierte geöffnete Greiferbackenstellung gewährleistet wird. Andererseits sieht der Rahmen 3 für eine Begrenzung der Greiferbackenbewegung für den Schließvorgang Anschläge 25 vor, gegen die jeweils eine Außenkontur 26 der Greiferbacke 18 beim Schließen anstößt.

Die vorstehend beschriebene Greifersysteme können schnell und ohne jegliche Montage, angepasst an eine jeweilige Greiferaufgabe direkt aus CAD-Datensätzen hergestellt werden. Sie sind damit in den Gesamtkosten verglichen mit marktüblichen Systemen sehr kostengünstig. Selbstverständlich ist es möglich, auch weitere, alternative Greiferkonstruktionen mit Hilfe generativer Fertigungsverfahren herzustellen, so dass sich der Erfindungsgedanke nicht ausschließlich auf die vorstehend beschriebenen Ausführungsbeispiele beschränkt.

### Bezugszeichenliste

- 1: Befestigungsflansch
- 2: Befestigungsöffnung
- 3: Rahmen
- 4: Innerer Raum
- 5: Faltenbalgartiges Aktorelement
- 6: Volumen
- 61,62: Teilvolumina
- 7: Wand
- 8: Anschlussleitung
- 9: Kraftübertragungselement
- 10: Nutförmige Ausnehmung
- 11: Führungswandabschnitt
- 12: Gelenk
- 13: Anschlussstück
- 14: Führungskontur
- 15: Greiferbacke
- 16: Hebelarm
- 17: Greiferfinger
- 18: Greiferbacke
- 19: Federelement
- 20: Abstützelement
- 21: Rastnasen
- 22: Haltestege
- 23: Seitenflanke
- 24: Endanschlag
- 25: Anschlag
- 26: Außenkontur

## Patentansprüche

1. Roboter-Greifer mit einem Befestigungsflansch (1) für eine lösbare Anbringung an einen Robotemlanipulatorarm, und wenigstens einem, sich in einem Rahmen (3) abstützenden Aktorelement (5), das wenigstens zwei Greiferbacken (15, 18) mittel- oder unmittelbar kinematisch über wenigstens eine Gelenkeinheit (12) betätigt,
wobei das Aktorelement (5) faltenbalgartig ausgebildet ist und ein inneres, über wenigstens eine Öffnung mit einem Medium befüllbares Volumen (6) einschließt, das sich bei Befüllen mit dem Medium längs einer durch die faltenbalgartige Ausbildung des Aktorelementes (5) vorgegebene Linearachse (A, B) auszudehnen und bei Entleerung des Volumens in entgegengesetzter Richtung längs der Linearachse zusammenzuziehen vermag,
**dadurch gekennzeichnet, dass** zumindest der Befestigungsflansch (1), der Rahmen (3) sowie das Aktorelement (5) einstückig unter Verwendung eines generativen Fertigungsverfahren hergestellt sind.

2. Roboter-Greifer nach Anspruch 1,
**dadurch gekennzeichnet, dass** der Befestigungsflansch (1), der Rahmen (3) sowie das Aktorelement (5) einstückig aus einem einheitlichen Material gefertigt sind,

3. Roboter-Greifer nach Anspruch 1 oder 2,
**dadurch gekennzeichnet, dass** das Volumen (6) des faltenbalgartig ausgebildeten Aktorelementes (5) von einer biegeelastischen Wand (7) umschlossen ist, die in einem Längsschnitt einen wellig ausgebildeten Volumenwandverlauf aufweist und eine entgegen der Raumrichtung, längs der sich das Aktorelement (5) ausdehnt, rückstellende Federkraft aufweist.

4. Roboter-Greifer nach einem der Ansprüche 1 bis 3,
**dadurch gekennzeichnet, dass** das Aktorelement (5) einerseits als mechanisches Gegenlager mit dem Rahmen (3) und andererseits mit einem Kraftübertragungselement (9) verbunden ist, das linearbeweglich vermittels des Rahmens (3) geführt ist,
dass das Kraftübertragungselement (9) über je eine Führungskulisse (11) mit zwei, jeweils über ein Gelenk (12) mit dem Rahmen (3) um eine Drehachse schwenkbar verbundene Anschlussstücke (13) in Wirkverbindung steht, und
dass an die Anschlussstücke (13) jeweils eine Greiferbacke (15, 18) montierbar ist oder dass die Anschlussstücke (13) jeweils einstückig mit einer Greiferbacke (15, 18) verbunden sind.

5. Roboter-Greifer nach Anspruch 4,
**dadurch gekennzeichnet, dass** die Drehachsen, um die jeweils die Anschlussstücke (13) drehbar gelagert sind, parallel zueinander orientiert sind.

6. Roboter-Greifer nach einem der Ansprüche 1 bis 3,
**dadurch gekennzeichnet, dass** das faltenbalgartig ausgebildete Aktorelement (5) symmetrisch an einen Rahmenabschnitt (31) angeordnet ist und zwei durch den Rahmenabschnitt (31) hindurch miteinander kommunizierende Teilvolumina (61, 62) einschließt, die sich bei Befüllen mit dem Medium längs einer gemeinsamen Linearachse (B), jedoch in entgegen gesetzte Richtungen ausdehnen, und
dass beide Teilvolumina (61, 62), jeweils dem Rahmenabschnitt (31) abgewandt, mit einem Hebelarm i(16) n Wirkverbindung stehen, der jeweils über eine mit dem Rahmen (3) verbundene Gelenkeinheit (12) mit einer Greiferbacke (15, 18) einstückig verbunden ist, die um das Filmgelenk schwenkbar gelagert ist.

7. Roboter-Greifer nach Anspruch 6,
**dadurch gekennzeichnet, dass** die Gelenkeinheit (12) als Filmgelenk ausgebildet ist.

8. Roboter-Greifer nach Anspruch 7 oder 8,
**dadurch gekennzeichnet, dass** die Gelenkeinheiten (12) beider Greiferbacken (15, 18) über einen, beide Greiferbacken (15, 18) voneinander beabstandenden Rahmenabschnitt (31) verbunden sind.

9. Roboter-Greifer nach einem der Ansprüche 1 bis 8,
**dadurch gekennzeichnet, dass** der zu fertigende Röboter-Greifer nach Form und Größe als CAD-Datensatz vorliegt, der einem generativen Fertigungsverfahren in einer der folgenden Art als Fertigungsparameter zuführbar ist:
- Rapid Prototyping mittels Photolithographischem Verfahren
- Photopolymerisation durch schichtweises Aushärten aus einem Flüssigkeitsbad.
- Schichtweises Auftragen und Verfestigen von Pulverschichten
- Schichtweises Austragen eines Bindemittels in einen Pulververbund
- Energiestrahldepositionsverfahren in Metallpulver
- Kunststoffextrudertechnik (FDM, Fused Deposition Modeling).

10. Roboter-Greifer nach einem der Ansprüche 1 bis 9,
**dadurch gekennzeichnet, dass** wenigstens ein Federelement vorgesehen ist, das mit dem faltenbalgartig ausgebildeten Aktorelement derart in Wirkverbindung steht, dass bei Befüllen des faltenbalgartig ausgebildeten Aktorelement mit dem Medium das Federelement spannbar und bei Entleeren entspannbar ist.

11. Roboter-Greifer nach Anspruch 10,
**dadurch gekennzeichnet, dass** das Federelement zwei gegenüberliegende Federelementenden aufweist, von denen ein Federelementende einstückig mit dem Roboter-Greifer verbunden ist und das andere Federelementende frei endet, und dass das Federelement entgegen der Federkraft mit dem frei endenden Federelementende gegen eine Abstützkontur am Roboter-Greifer einspannbar ist.

12. Roboter-Greifer nach einem der Ansprüche 4 bis 9 und 10,
**dadurch gekennzeichnet, dass** das Federelement zwischen den Greiferbacken wirkt.

13. Roboter-Greifer nach Anspruch 11,
**dadurch gekennzeichnet, dass** das eine Federelementende einstückig mit einer Greiferbacke verbunden ist und das andere, lose Federelementende in eine in der anderen Greiferbacke vorgesehene Abstützstruktur derart einsetzbar ist, dass das Federelement beide Greiferbacken auseinander zu drücken vermag.

## Claims

1. Robot gripper with a fixing flange (1) for detachably attaching it to a robot manipulator arm, and at least one actuator element (5) which is supported in a frame (3), that actuates at least two gripper jaws (15, 18) indirectly or directly kinematically via at least one articulated unit (12), wherein the actuator element (5) is in the form of a bellows and encloses an internal volume (6), which can be filled with a medium via at least one opening, and is capable of expanding, when filled with the medium, along a linear axis (A, B) predetermined by the bellows design of the actuator element (5) and capable of contracting, when the volume is emptied, in the opposite direction,
**characterized in that**
at least the fixing flange (1), the frame (3) and the actuator element (5) are manufactured integrally using a generative manufacturing method.

2. Robot gripper according to Claim 1,
**characterized in that**
the fixing flange (1), the frame (3) and the actuator element (5) are produced integrally from a uniform material,

3. Robot gripper according to Claim 1 or 2,
**characterized in that**
the volume (6) of the actuator element (5) in the form of a bellows is enclosed by a flexurally elastic wall (7), which has an undulating wall profile in a longitudinal section, and a returning spring force opposite to the spatial direction along which the actuator element (5) expands.

4. Robot gripper according to one of the Claims 1 to 3,
**characterized in that**
the actuator element (5) is connected on one side to the frame (3) as a mechanical counter-bearing and on the other side to a force transmission element (9), which is guided in a linearly displaceable manner by means of the frame (3),
that the force transmission element (9) is operatively connected in each case via a guiding link (11) to two connecting pieces (13), each connected via a joint (12) to the frame (3) so that they can be pivoted about a rotational axis, and
that on each of the connecting pieces (13) a gripper jaw (15, 18) can be mounted, or that the connecting pieces (13) are each integrally connected to a gripper jaw (15, 18).

5. Robot gripper according to Claim 4,
**characterized in that**
the rotational axes, about which the connecting pieces (13) are rotatably mounted, are aligned parallel to each other.

6. Robot gripper according to any one of the Claims 1 to 3,
**characterized in that**
the bellows-shaped actuator element (5) is arranged symmetrically on a frame section (31) and encloses two sub-volumes (61, 62) intercommunicating through the frame section (31), which when filled with the medium expand along a common linear axis (B) but in opposite directions, and
that both sub-volumes (61, 62), each facing away from the frame section (31), are operatively connected to a lever arm (16), which is respectively integrally joined via an articulated unit (12) connected to the frame (3) to a gripper jaw (15, 18), which is pivotably mounted about the film joint.

7. Robot gripper according to Claim 6,
**characterized in that**
the articulated unit (12) is in the form of a film joint.

8. Robot gripper according to Claim 7 or 8,
**characterized in that**
the articulated units (12) of both gripper jaws (15, 18) are connected via a frame section (31) spacing both gripper jaws (15, 18) apart.

9. Robot gripper according to one of the Claims 1 to 8,
**characterized in that**
the robot gripper to be produced exists in terms of shape and size as a CAD data set which can be supplied to a generative manufacturing method of one of the following kinds as production parameters:
- Rapid Prototyping using a photolithographic method
- Photopolymerization by layered hardening from a liquid bath
- Layered application and solidification of powder layers
- Layered discharging of a binding agent into a powder compound
- Energy beam deposition methods in metallic powders
- Plastic extrusion technology (FDM, Fused Deposition Modeling).

10. Robot gripper according to one of the Claims 1 to 9,
**characterized in that**
at least one spring element is provided, which is operatively connected to the bellows-shaped actuator element in such a way that when the spring element is filled with the medium the spring element can be tensioned, and when emptied can be de-tensioned.

11. Robot gripper according to Claim 10,
**characterized in that**
the spring element has two oppositely placed spring element ends, of which one end of the spring element is integrally connected to the robot gripper and the other end of the spring element is free, and that the spring element can be clamped tight against the spring force with the free end of the spring element against a support contour on the robot gripper.

12. Robot gripper according to one of the Claims 4 to 9 and 10,
**characterized in that**
the spring element acts between the gripper jaws.

13. Robot gripper according to Claim 11,
**characterized in that**
the one spring element end is integrally connected to one gripper jaw and the other, free spring element end can be inserted in a support structure provided in the other gripper jaw in such a way that the spring element is capable of pressing both gripper jaws apart.

## Revendications

1. Grappin de robot avec une bride de fixation (1) pour une fixation amovible sur un bras manipulateur de robot et au moins un élément acteur (5) s'appuyant sur un cadre (3), actionnant au moins deux mâchoires de grappin (15, 18), de façon indirectement ou directement cinématique, par le biais d'une unité d'articulation (12), dans lequel l'élément acteur (5) est conçu à la manière d'un soufflet et contient un volume (6) apte à être rempli avec un produit par au moins une ouverture, capable de se détendre le long d'un axe linéaire (A, B) prédéfini par la forme du genre soufflet de l'élément acteur (5), lors du remplissage avec le produit, et de se rétracter dans le sens opposé le long de l'axe linéaire, lorsque le volume est vidé,
**caractérisé en ce qu'**au moins la bride de fixation (1), le cadre (3) ainsi que l'élément acteur (5) sont réalisés en une seule pièce, à l'aide d'un procédé de fabrication génératif.

2. Grappin de robot selon la revendication 1,
**caractérisé en ce que** la bride de fixation (1), le cadre (3) ainsi que l'élément acteur (5) sont réalisés intégralement à partir d'un matériau homogène.

3. Grappin de robot selon l'une des revendications 1 ou 2,
**caractérisé en ce que** le volume (6) de l'élément acteur (5) conçu à la manière d'un soufflet est renfermé dans paroi élastique en flexion (7), la paroi de volume s'étendant en formant des ondulations dans une coupe transversale et comportant une force de rappel allant contre le sens dans lequel s'étire l'élément acteur (5).

4. Grappin de robot selon l'une des revendications 1 à 3,
**caractérisé en ce que** l'élément acteur (5) est d'une part relié au cadre (3) en tant que contre-appui mécanique, et d'autre part à un élément de transmission de force (9), qui est guidé de façon linéaire au moyen du cadre (3),
**en ce que** l'élément de transmission de force (9) est en liaison fonctionnelle avec deux pièces de raccordement (13), reliées au cadre (3) par le biais d'une articulation (12) de façon pivotante autour d'un axe de rotation, par le biais d'une coulisse de guidage (11), et
**en ce qu'**une mâchoire de grappin (15, 18) peut être montée sur chacune des pièces de raccordement (13) ou **en ce que** les pièces de raccordement (13) sont reliées chacune en monobloc à une mâchoire de grappin (15, 18).

5. Grappin de robot selon la revendication 4,
**caractérisé en ce que** les axes de rotation autour desquels les pièces de raccordement (13) sont disposées en rotation, sont orientés de façon parallèle l'un par rapport à l'autre.

6. Grappin de robot selon l'une des revendications 1 à 3,
**caractérisé en ce que** l'élément acteur (5) conçu à la manière d'un soufflet est disposé symétriquement sur une portion de cadre (31) et renferme deux volumes partiels (61, 62) communiquant entre eux à travers la portion de cadre (31), qui se détendent dans des sens opposés mais tous deux le long d'un axe linéaire commun (B), lors du remplissage avec le produit, et
**en ce que** chacun des deux volumes partiels (61, 62), du côté détourné de la portion de cadre (31), est en liaison fonctionnelle avec un bras de levier (16), qui est relié en une seule pièce, par le biais d'une unité d'articulation (12) reliée au cadre (3), à une mâchoire de grappin (15, 18) disposée de façon pivotante autour de l'articulation pelliculaire.

7. Grappin de robot selon la revendication 6,
**caractérisé en ce que** l'unité d'articulation (12) est conçue comme une articulation pelliculaire.

8. Grappin de robot selon l'une des revendications 7 ou 8,
**caractérisé en ce que** les unités d'articulation (12) des deux mâchoires de grappin (15, 18) sont reliées par le biais d'une portion de cadre (31) espaçant entre elles les deux mâchoires de grappin (15, 18).

9. Grappin de robot selon l'une des revendications 1 à 8,
**caractérisé en ce que** le grappin de robot à réaliser existe en tant que série de données CAO, en fonction de la forme et de la taille, qui peut être fournie en tant que paramètre de fabrication pour un procédé de fabrication génératif, parmi les suivants :
- Prototypage rapide au moyen d'un procédé photolithographique
- photopolymérisation par durcissement par couches, au bain-marie
- application par couches et fixation de couches de poudre
- procédé de dépôt de faisceaux énergétiques dans une poudre métallique
- technique d'extrusion du plastique (FDM, Fused Deposition Modeling).

10. Grappin de robot selon l'une des revendications 1 à 9,
**caractérisé en ce qu'**il est prévu au moins un élément élastique coopérant de telle manière avec l'élément acteur conçu comme un soufflet, que l'élément élastique peut être tendu lors du remplissage de l'élément acteur conçu comme un soufflet avec le produit, et détendu lors du vidage.

11. Grappin de robot selon l'une des revendications 10,
**caractérisé en ce que** l'élément élastique comporte deux extrémités d'élément élastique opposées, parmi lesquelles une extrémité d'élément élastique est reliée en une seule pièce avec le grappin de robot et l'autre extrémité d'élément élastique se termine librement, et
**en ce que** l'élément élastique peut être tendu, contre la force de ressort, par son extrémité d'élément élastique finissant librement, contre un contour d'appui sur le grappin de robot.

12. Grappin de robot selon l'une des revendications 4 à 9 et 10,
**caractérisé en ce que** l'élément élastique agit entre les mâchoires de grappin.

13. Grappin de robot selon la revendication 11,
**caractérisé en ce que** l'une des extrémités d'élément élastique est reliée en une seule pièce à une mâchoire de grappin, et l'autre extrémité libre de l'élément élastique peut être insérée de telle manière dans la structure d'appui prévue dans l'autre mâchoire de grappin, que l'élément élastique est capable d'écarter les deux mâchoires de grappin l'une de l'autre.
